(19) Europäisches Patentamt
European Patent Office
Office européen des brevets

(11) **EP 2 154 812 A2**

(12) **DEMANDE DE BREVET EUROPEEN**

(43) Date de publication:
**17.02.2010 Bulletin 2010/07**

(51) Int Cl.:
*H04L 5/06* (2006.01)        *H04N 7/24* (2006.01)
*H04N 7/08* (2006.01)

(21) Numéro de dépôt: **09176151.0**

(22) Date de dépôt: **10.05.1996**

(84) Etats contractants désignés:
**CH DE ES LI SE**
Etats d'extension désignés:
**AL LT LV SI**

(30) Priorité: **10.05.1995 FR 9505730**

(62) Numéro(s) de document de la (des) demande(s)
initiale(s) en application de l'article 76 CBE:
**96460019.1 / 0 742 654**

(71) Demandeurs:
• **FRANCE TELECOM
75015 Paris (FR)**
• **TDF
92541 Montrouge Cedex (FR)**

(72) Inventeurs:
• **Sueur, Bertrand
35000, RENNES (FR)**
• **Richard, Joël
35000, RENNES (FR)**
• **Degoulet, Gabriel
35000, RENNES (FR)**

(74) Mandataire: **Bioret, Ludovic et al
Cabinet Vidon
Technopôle Atalante
16 B, rue de Jouanet
35703 Rennes Cedex 07 (FR)**

Remarques:
Cette demande a été déposée le 16-11-2009 comme demande divisionnaire de la demande mentionnée sous le code INID 62.

(54) **Emetteur d'un signal numérique multiporteuse limitant les brouillages cocanaux avec un signal de télévision analogique**

(57) L'invention concerne un émetteur d'un signal numérique formé d'une pluralité de sous-porteuses et présentant un espacement fréquentiel interporteuse $\Delta f$ entre deux sous-porteuses voisines.

Selon l'invention, un tel émetteur comprend des moyens de mise en forme dudit signal numérique agissant de façon que ledit espacement fréquentiel interporteuse $\Delta f$ soit un sous-multiple d'une fréquence ligne fl d'au moins un signal de télévision analogique prédéterminé et des moyens d'émission d'une desdites sous-porteuses à une fréquence sensiblement égale à pv + n.fl, pv étant porteuse vidéo principale dudit signal de télévision analogique et n étant un nombre entier, de façon qu'un sous-ensemble desdites sous-porteuses, dit sous-ensemble de coïncidence, coïncide sensiblement avec au moins certaines desdites raies analogiques vidéo.

Ainsi, les sous-porteuses numériques sont placées, selon l'axe fréquentiel, de façon qu'un nombre réduit de sous-porteuses (le sous-ensemble de coïncidence), clairement identifiées, soient superposées à des raies du signal analogique et que les autres sous-porteuses ne sont pratiquement pas perturbées par ces raies analogiques.

Fig. 5

**Description**

Le domaine de l'invention est celui de la transmission de signaux numériques multiporteuse, c'est-à-dire de signaux mettant en oeuvre une pluralité de sous-porteuses émises simultanément et modulées chacune par des éléments de données distincts. Plus précisément, l'invention concerne un tel signal, prévu pour être éventuellement transmis simultanément à un (ou plusieurs) signal analogique de télévision.

Les signaux multiporteuses sont généralement désignés par le terme FDM (Frequency Division Multiplex (multiplex de fréquences)). Un exemple particulier de ces signaux, auquel s'applique notamment l'invention, est les signaux OFDM (Orthogonal Frequency Division Multiplex (multiplexage de fréquences orthogonales)).

Un signal OFDM est par exemple utilisé dans le système de diffusion numérique décrit notamment dans le brevet français FR 86 09622 déposé le 2 juillet 1986 et dans le document "Principes de modulation et de codage canal en radiodiffusion numérique vers les mobiles (M. Alard et R. Lassalle ; Revue de l'UER, n DEG 224, août 1987, pp. 168-190), et connu sous le nom de système COFDM (Coded Orthogonal Frequency Division Multiplex (multiplexage de fréquences orthogonales codées)).

Ce système COFDM a notamment été développé dans le cadre du projet européen DAB (Digital Audio Broadcasting (diffusion audionumérique)). Il est également candidat à la normalisation pour la diffusion terrestre de la télévision numérique. Plus généralement, le système COFDM permet la transmission de tout type de signaux numériques (ou analogiques échantillonnés, mais non nécessairement quantifiés).

Classiquement, les plans de fréquence de télévision découpent les bandes VHF et UHF en canaux de largeur 8 MHz (plus rarement 7 MHz ou 6 MHz) initialement destinés à être affectés chacun à un programme de télévision. Mais, dans une zone de service donnée, on ne peut pas utiliser tous les canaux en raison de brouillages mutuels. Par exemple, on n'utilise généralement pas en diffusion hertzienne les canaux adjacents à un canal déjà utilisé. De même, un canal alloué dans une zone de service donnée est inutilisable dans les zones géographiquement voisines car il y aurait brouillage réciproque au voisinage de la frontière entre les deux zones. On appelle par la suite "tabou" tous les canaux ainsi rendus impropres à la transmission, dans une zone géographique donnée, de signaux de télévision analogiques conventionnels PAL, SECAM ou NTSC.

A cause de la périodicité du balayage ligne des signaux vidéo analogiques de type PAL, SECAM ou NTSC, le spectre de ces signaux est approximativement un spectre de raies espacées de l'inverse de la durée d'une ligne, soit 15625 Hz dans l'exemple des systèmes européens PAL et SECAM. Entre ces raies, l'énergie du signal analogique est plus faible.

Il apparaît clairement qu'il est souhaitable d'utiliser ces canaux tabous pour d'autres applications, afin d'optimiser l'utilisation de la ressource fréquentielle. En particulier, l'homme du métier a pensé à les utiliser pour la diffusion de signaux numériques.

Ainsi, le brevet français FR-86 18163 au nom des mêmes déposants a déjà abordé le problème de la cohabitation de signaux de télévision analogiques et de signaux numériques multiporteuse. Selon la technique proposée dans ce brevet, les raies du signal analogique de télévision et les sous-porteuses du signal numériques sont entrecroisées. En d'autres termes, les sous-porteuses sont placées entre les raies du signal analogique, dans les zones du spectre fréquentiel les moins perturbées par ce signal analogique. On cherche à maximiser la distance entre les raies analogiques et les sous-porteuses numériques.

Le brevet FR 86 18163 propose donc de résoudre le problème du brouillage réciproque en entrecroisant fréquentiellement les spectres analogiques et numériques, c'est-à-dire en rendant le plus disjoints possible les supports spectraux des signaux analogique et numérique.

Malheureusement, ce critère conduit à n'émettre qu'une sous-porteuse numérique sur 8 par exemple, ce qui pénalise trop fortement la capacité du système numérique, la perte en débit étant très importante.

Le document EP-0 571 005 propose une amélioration à cette technique, consistant à pondérer la puissance affectée aux sous-porteuses en fonction de leur position par rapport au signal de télévision analogique (les sous-porteuse proches des raies du signal analogiques étant affectées d'une puissance réduite). A réception, une pondération inverse doit être appliquée. Le récepteur se trouve donc plus complexe, sans que le gain en capacité du système numérique soit très important.

L'invention a notamment pour objectif de pallier ces inconvénients de l'état de la technique.

Plus précisément, un objectif de l'invention est de fournir un signal multiporteuse susceptible d'être transmis simultanément à un ou plusieurs signaux analogiques cocanaux, en minimisant les brouillages réciproques.

En d'autres termes, l'invention a pour objectif de fournir un tel signal, qui puisse être transmis même dans les canaux tabous (c'est-à-dire impropres à la transmission de signaux de télévision conventionnels).

L'invention a donc pour objectif de fournir un tel signal, qui minimise les effets objectifs (brouillages) et/ou subjectifs (aspects psychovisuels ou psychoacoustiques) du signal de l'invention sur les signaux analogiques de télévision, et réciproquement.

L'invention a également pour objectif de fournir un tel signal, ne nécessitant pas, dans certains modes de réalisation, de modification des techniques d'émission des signaux de télévision analogique, ni de la planification hertzienne de ces signaux (en particulier en présence de plusieurs signaux analogiques couvrant des zones géographiques voisines).

L'invention a encore pour objectif de fournir un tel signal, permettant de maximiser le débit transmis. Un objectif particulier de l'invention est également de permettre l'optimisation de ce débit dans le temps, en fonction de l'évolution de la mise en oeuvre des signaux analogiques (destinés à disparaître dans le futur).

Ces objectifs, ainsi que d'autres qui apparaîtront par la suite, sont atteints selon l'invention par un émetteur selon la revendication 1.

Ainsi, selon l'invention, les sous-porteuses numériques sont placées, selon l'axe fréquentiel, de façon que :

- un nombre réduit de sous-porteuses (le sous-ensemble de coïncidence), clairement identifiées, sont superposées à des raies du signal analogique;
- les autres sous-porteuses ne sont pratiquement pas perturbées par ces raies analogiques.

On définit donc des relations précises entre les fréquences propres des deux signaux, malgré leurs natures a priori très différentes.

Dans la présente invention, et contrairement aux documents FR 86 18163 et EP 0 571 005, toutes les sous-porteuses numériques sont utilisées pour maximiser le débit transmis et les spectres numérique et analogique ne s'entrecroisent plus.

Un autre avantage de la présente invention est qu'elle ne pénalise en rien les performances, notamment en débit, du système quand le signal analogique brouilleur est inexistant.

L'évolution à long terme (c'est-à-dire quand les signaux brouilleurs analogiques seront éteints) est ainsi facilitée, puisque le signal numérique ne sera à ce moment en aucune façon pénalisée par sa conception initiale.

Ainsi, et contrairement au système des brevets pré-cités (lesquels sont quasi incompatibles avec un environnement exempt de brouilleurs, pour cause d'efficacité spectrale suffisante) le système objet de la présente invention ne souffre d'aucun désavantage par rapport à un système qui n'aurait pas été conçu pour limiter les brouillages réciproques, au moins dans certains modes de réalisation.

Avantageusement, les récepteurs peuvent optimiser la qualité de la réception, en tenant compte de l'appartenance ou non des porteuses au sous-ensemble de coïncidence, par exemple en pondérant la confiance portée à chaque sous-porteuse dans le mécanisme du décodage à décision douce, selon que cette sous-porteuse appartienne ou non au sous-ensemble de coïncidence. De même, comme cela apparaît ci-dessous, la structure du signal peut prendre en compte cette appartenance.

Il est à noter que cette technique relève d'une démarche tout à fait nouvelle pour l'homme du métier, allant à l'encontre des techniques classiques. En effet, au lieu de tenter de limiter la puissance du brouillage cocanal, on cherche à réduire ses effets. En d'autres termes, on vise à maîtriser le brouillage, et à le contraindre sur un nombre réduit de sous-porteuses. On accepte donc de perdre de l'efficacité sur les sous-porteuses du sous-ensemble de coïncidence, pour augmenter l'efficacité globale.

Cette technique est donc tout à fait différente celle décrite dans le brevet FR-86 18163 déjà cité, qui entrecroise fréquentiellement les signaux numériques et analogiques. Elle ne doit pas non plus être confondue avec l'usage connu depuis longtemps de mise en décalage fréquentiel de précision des porteuses principales de deux ou plusieurs signaux de télévision analogique : dans ce dernier cas en effet, les signaux dont on essaie de limiter le brouillage cocanal réciproque sont de même nature, et leurs fréquences propres sont en conséquence spontanément identiques.

De plus, si la mise en décalage fréquentiel de précision des porteuses principales de deux ou plusieurs signaux de télévision analogique est efficace, c'est parce qu'elle permet de minimiser la gêne subjectivement perçue par un oeil humain : dans le cadre de l'invention présente, c'est la gêne objective des signaux analogiques vers les signaux numériques - et réciproquement - qui est minimisée du fait des propriétés physiques d'orthogonalité des sous-porteuses numériques.

De façon avantageuse, la puissance et/ou le choix d'une constellation de modulation et/ou le choix d'une robustesse de codage affectées à chacune desdites sous-porteuses tient compte de la position fréquentielle de ladite sous-porteuse par rapport auxdites raies analogiques vidéo.

On maîtrise ainsi les perturbations réciproques des deux signaux numérique et analogique (éventuellement en privilégiant l'un ou l'autre de ces signaux, en fonction des besoins ou des impératifs).

Selon un autre aspect important de l'invention, l'affectation de la puissance et/ou le choix d'une constellation de modulation et/ou le choix d'une robustesse de codage source tient compte avantageusement d'au moins un des critères appartenant au groupe comprenant :

- compensation au moins partielle de la différence de perceptibilité subjective de chacune desdites sous-porteuses sur l'image portée par ledit signal analogique;

- compensation au moins partielle des différences de sensibilité des sous-porteuses vis-à-vis du brouillage induit par ledit signal analogique, et réciproquement.

Ainsi, on peut par exemple pondérer les sous-porteuses sensiblement proportionnellement à la courbe dite de "perceptibilité subjective" d'un brouilleur sur une image analogique.

Selon un mode de réalisation préférentiel de l'invention, les sous-porteuses dudit sous-ensemble de coïncidence sont émises avec une puissance inférieure à la puissance affectée aux autres sous-porteuses. Elles peuvent également ne pas être émises.

Cette variation volontaire de puissance émise, a priori inconnue du récepteur, est vue par ce dernier comme si elle avait été provoquée involontairement par un ou plusieurs échos du canal de transmission.

Dans les deux cas, la perturbation du (ou des) signal analogique est réduite, au prix d'une faible perte sur le signal numérique. Dans le premier cas, les sous-porteuses sont émises à faible puissance, et il est avantageux que les récepteurs leurs affectent une confiance plus faible, bien que cela ne soit pas obligatoire, du fait de l'utilisation d'un codage convolutif. De même, dans le second cas, les récepteurs peuvent, de façon avantageuse, connaître la position des sous-porteuses non émises, mais cela n'est pas obligatoire.

Lorsque certaines desdites sous-porteuses sont, au moins à certains instants de transmission, des sous-porteuses pilotes portant une information de référence connue des récepteurs, notamment pour la synchronisation fréquentielle des récepteurs, il est avantageux que lesdites sous-porteuses pilotes n'appartiennent pas audit sous-ensemble de coïncidence.

En effet, il est important que ces sous-porteuses pilotes soient le moins perturbées possibles. L'invention permettant de connaître par avance les sous-porteuses qui seront perturbées par le signal analogique, il est possible d'éviter celles-ci.

Par ailleurs, préférentiellement, la puissance affectée auxdites sous-porteuses pilotes est supérieure à la puissance des autres sous-porteuses. A nouveau, cela permet de favoriser la synchronisation fréquentielle, sans que la surpuissance perturbe le signal analogique.

Selon un mode de réalisation avantageux de l'invention, lesdites sous-porteuses pilotes sont réparties sur tous lesdits symboles à l'exception, le cas échéant, de symboles spéciaux de synchronisation temporelle et/ou fréquentielle.

Préférentiellement, l'espacement fréquentiel interporteuse Δf entre deux sous-porteuses voisines est choisi de façon à limiter également les perturbations induites par les raies audio dudit signal de télévision analogique. Dans le cas de signaux PAL ou SECAM, on verra qu'il est possible que la composante audio ne perturbe qu'un nombre limité de sous-porteuses numériques.

Dans le cas où il est émis simultanément à au moins deux signaux de télévision analogiques émis en position d'offset de trame et/ou de ligne, **caractérisé en ce qu'**il tient compte de la valeur desdits offsets de trame et/ou de ligne.

Dans le cas particulier d'un signal comprenant 8192 sous-porteuses, l'espacement fréquentiel interporteuse Δf vaut avantageusement fl/p, avec p choisi avantageusement dans le groupe comprenant les valeurs 12, 14, 15 et 16.

L'invention concerne également les émetteurs d'un signal numérique multiporteuse tel que décrit ci-dessus.

D'autres caractéristiques et avantages de l'invention apparaîtront à la lecture de la description suivante d'un mode de réalisation préférentiel de l'invention, donné à titre de simple exemple illustratif et non limitatif, et des dessins annexés dans lesquels :

- la figure 1 représente de façon schématique un signal numérique multiporteuse selon l'invention, émis conjointement à un signal de télévision analogique classique;
- la figure 2 illustre un signal selon l'invention, dans le cas de la présence de plusieurs (trois) signaux de télévision analogiques;
- la figure 3a présente un exemple, connu en soi, de la répartition de pilotes de référence dans l'espace temps-fréquence occupé par un signal multiporteuse;
- la figure 3b illustre une nouvelle répartition de pilotes de référence dans l'espace temps-fréquence occupé par le signal multiporteuse selon la figure 1, permettant de tirer pleinement profit de celui-ci;
- la figure 4 présente un exemple de signal selon l'invention, dans lequel les sous-porteuses pilotes possèdent une puissance supérieure aux autres sous-porteuses;
- la figure 5 présente un autre exemple de signal selon l'invention du même type que celui de la figure 4, dans lequel, de plus, les sous-porteuses coïncidant avec les raies du signal analogique ne sont pas émises;
- la figure 6 est un synoptique d'un mode de réalisation d'un émetteur adapté pour le signal de la figure 5;
- les figures 8a à 8c illustrent respectivement un profil de filtrage pouvant être appliqué à l'émission à un signal selon l'invention, la puissance affectée en conséquence aux sous-porteuses de ce signal, et les raies analogiques du signal analogique perturbateur;
- la figure 9 présente un autre exemple de profil de filtrage pouvant être appliqué à l'émission à un signal selon l'invention, tenant compte de la perceptibilité subjective d'un brouilleur sur une image analogique.

L'invention propose donc un émetteur d'un nouveau signal numérique multiporteuse, défini de façon que certaines de ses sous-porteuses coïncident avec les raies d'un éventuel signal analogique de télévision (les autres sous-porteuses n'étant ainsi pas, ou peu, perturbées par ce signal analogique).

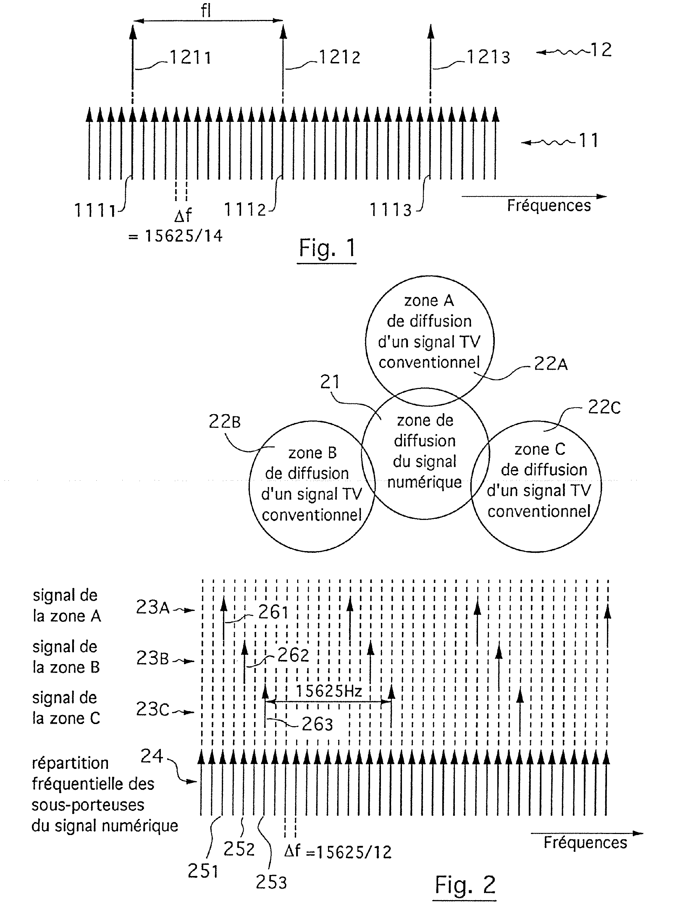

La figure 1 illustre un tel signal multiporteuse 11, par rapport à un signal de télévision 12.

Le signal analogique 12 est, approximativement, du fait de la périodicité du balayage ligne, un spectre de raies $121_1$ à $121_3$ espacées de l'inverse de la durée d'une ligne (fl), soit 15625 Hz dans le cas d'un signal PAL ou SECAM.

Pour limiter le brouillage cocanal apporté par l'analogique 12 sur le signal numérique multiporteuse 11, on cherche selon l'invention à limiter le brouillage provoqué par chacune des raies $121_1$ à $121_3$. On atteint cet objectif en positionnant les sous-porteuses du signal multiporteuse 11 de façon que chaque raie $121_i$ brouille une et une seule sous-porteuse $111_i$ (alors qu'en l'absence de l'invention, chacune de ces raies analogiques brouillerait toutes les sous-porteuses numériques).

L'invention permet donc de garantir que chacune des raies analogiques reste orthogonale ou quasi-orthogonale à toutes les sous-porteuses du signal numérique, sauf une et une seule.

Ce résultat est obtenu en choisissant correctement la fréquence d'échantillonnage du signal numérique multiporteuse, de sorte que l'espacement fréquentiel interporteuse $\Delta f$ entre deux sous-porteuses voisines soit un sous-multiple de la fréquence ligne fl.

En d'autres termes, on choisit $\Delta f$ de façon que :

$$p.\Delta f = fl \ (= 15625 \text{ Hz en Europe}).$$

avec p ou entier strictement positif.

Il ne reste alors plus qu'à ajuster en radiofréquences le positionnement fréquentiel relatif des signaux analogique 12 et numérique 11 de façon qu'une raie du signal analogique occupe la position fréquentielle d'une sous-porteuse numérique $111_i$. Cet ajustement fréquentiel en radio-fréquence est en particulier atteint dès que la porteuse vidéo principale du signal analogique occupe la position fréquentielle d'une sous-porteuse numérique $111_i$.

Par exemple et de façon non limitative, dans le cas d'un signal OFDM à N = 8192 sous-porteuses, on pourra choisir entre autres valeurs entières p = 16 (soit une fréquence d'échantillonnage de 8 MHz exactement), p = 14 (soit une fréquence d'échantillonnage proche de 9,14285714285 MHz comme dans l'exemple de la figure 1), ou p = 12, ou p = 15.

Sur la figure 1, on a choisi p = 14, ce qui correspond à une fréquence d'échantillonnage : 8192 * 15625 / 14 Hz.

On remarquera que le nouveau signal numérique ainsi défini permet également de minimiser le brouillage induit sur le signal numérique par le son analogique, grâce au fait que la sous-porteuse audio des systèmes analogiques est située à une distance fréquentielle typiquement 5,5 MHz, 6,0 ou 6,5 MHz pour le PAL ou le SECAM de la porteuse vidéo qui est multiple de la fréquence ligne 15625 Hz.

On notera que le signal numérique de l'invention comprend deux sous-ensembles de sous-porteuses brouillées de façons différentes :

- un sous-ensemble de coïncidence formé par les sous-porteuses $111_i$ coïncidant avec des raies $121_i$ du signal analogique;
- un sous-ensemble formé par les autres sous-porteuses 112i, moins brouillées par le signal analogique que les sous-porteuses du sous-ensemble de coïncidence.

Comme on le verra par la suite, ces deux sous-ensembles peuvent être traités différemment, à l'émission et/ou à la réception.

Dans le cas où plusieurs signaux analogiques peuvent perturber le signal numérique, on tient compte de chacun d'entre eux, ainsi que cela est illustré en figure 2.

Dans cet exemple, la zone de diffusion du signal numérique 21 est partiellement commune avec les zones $22_A$, $22_B$ et $22_C$ de diffusion de signaux analogiques de télévision.

Les signaux analogiques $23_A$ à $23_C$ des zones $22_A$ à $22_C$ sont classiquement décalés en fréquence. Le signal numérique 24 est défini de façon que certaines $25_1$, $25_2$, $25_3$ des sous-porteuses coïncident avec les raies $26_1$, $26_2$, $26_3$ de chacun des signaux analogiques. Chacune des raies $26_i$ de chacun des signaux analogiques (par exemple SECAM) est quasi-orthogonale à toutes les sous-porteuses numériques sauf une seule.

La tolérance sur la précision de la superposition fréquentielle des sous-porteuses $25_i$ avec les raies $26_i$ de chacun des signaux analogique est de l'ordre de $\Delta f/10$. Cette tolérance reste toujours supérieure à 50 Hz, ce qui garantit que le positionnement fréquentiel relatif d'un signal multiporteuse et d'un (ou plusieurs) signal analogique conventionnel selon l'invention reste compatible avec une éventuelle mise en décalage fréquentiel de précision (encore appelé "en position d'offset de trame" c'est-à-dire à quelques Hz près) des signaux de télévision analogique entre eux.

Définir le nouveau signal numérique émis de façon à ce que chacune des raies de chacun des signaux analogiques cocanal soit quasi-orthogonale à toutes les sous-porteuses numériques sauf une seule, est en particulier possible si p = 12 ou dans une moindre mesure p = 15, car les spécialistes de la planification hertzienne raisonnent souvent en termes de douzièmes (ou dans une moindre mesure en termes de tiers) de la fréquence ligne des systèmes analogiques conventionnels.

Les autres cas (par exemple p = 14) restent cependant compatibles avec le positionnement fréquentiel relatif "en offset de ligne" des signaux analogiques au prix d'un changement des habitudes. Par exemple si p = 14, il faudra avantageusement raisonner en termes de quatorzième de la fréquence ligne pour positionner "en offset de ligne" les signaux analogiques les uns par rapport aux autres de façon à tirer pleinement parti de l'invention.

Pour un signal OFDM, et pour chaque symbole d'indice n, chacune des sous-porteuses d'indice k est modulée en amplitude et phase par le vecteur $C_{n,k}$, de sorte que le signal OFDM émis s'écrit :

$$\Re\left\{\sum_{n=-\infty}^{n=+\infty}\sum_{k=0}^{k=N-1} C_{n,k}.e^{2i\pi f_k(t-nT'_s)}.rect(t-nT'_s)\right\}$$

où $T_s' = T_s + \Delta$
avec :
$T_s'$ durée totale du symbole ;
$T_s$ durée de la partie dite "utile" du symbole ;
$\Delta$ durée de l'intervalle de garde;
$f_k = f_0 + k/T_s$
et rect(t) = 1 si $-\Delta \leq t < T_s$
rect(t) = 0 sinon
Pour un symbole n donné, et en supposant correcte la synchronisation
temporelle du récepteur, le signal reçu s'écrit alors :

$$\Re\left\{\sum_{k=0}^{k=N-1} Y_{n,k}.e^{2i\pi f_k t}\right\}$$

où $Y_{n,k} = H_{n,k}. C_{n,k}$
et où les nombres complexes $H_{n,k}$ correspondent à un échantillonnage - en
temps (selon l'indice n) et en fréquences (selon l'indice k) - de la réponse fréquentielle du canal.
Par raison de commodité de réalisation matérielle, les sous-porteuses sont souvent générées par transformée de Fourier discrète inverse calculée sur un nombre de points N = $2^n$. Le nombre exact de sous-porteuses "utiles" est alors ajusté par simple forçage à zéro des $C_k$ correspondant aux sous-porteuses des bords du canal qu'on ne souhaite pas émettre. Si kmin et kmax désignent les indices des première et dernière (fréquentiellement) sous-porteuses réellement émises, alors $C_{n,k} = 0$ pour tous les symboles n et toutes les valeurs de l'indice k < Kmin ou > kmax).
L'estimation $H_{n,k}$ dans le récepteur, pour toutes les valeurs de l'indice temporel n et pour toutes les valeurs de l'indice fréquentiel k correspondant à des sous porteuses utiles, est indispensable au recouvrement de l'information transmise ("utiles" désigne les porteuses réellement émises).
Une méthode souvent employée consiste à insérer dans la trame OFDM des pilotes, c'est-à-dire des sous-porteuses dont le positionnement en fréquence est a priori connu du récepteur, de même que la modulation $P_{n,k}$ (La notion $C_{n,k}$ est remplacée par $P_{n,k}$ pour rappeler que le vecteur complexe est dans ce cas a priori connu du récepteur) qu'elles portent à des instants n eux-mêmes également prédéterminés.

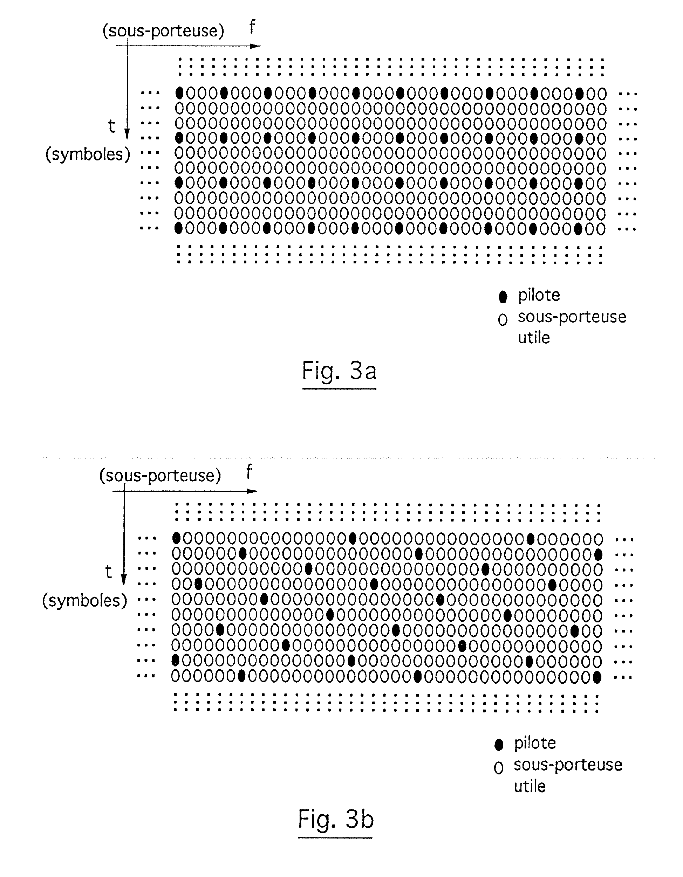

La figure 3a illustre de façon schématique un mode de répartition déjà connu en soi de ces pilotes (en noir) parmi les sous-porteuses utiles (en blanc) dans l'espace temps-fréquence.
Pour ces sous-porteuses pilotes, la division à la réception de $Y_{n,k}$ reçu ($Y_{n,k} = H_{n,k}.P_{n,k} +$ bruit) par le $P_{n,k}$ émis et connu a priori fournit une estimation du $H_{n,k}$.
Cette estimation de $H_{n,k}$ est hélas dégradée par les brouillages dus aux signaux analogiques cocanaux.
Selon une caractéristique avantageuse de l'invention, les pilotes sont choisis parmi les sous-porteuses n'appartenant pas au sous-ensemble de coïncidence (c'est-à-dire parmi celles qui sont le moins perturbées par les signaux analogiques). En d'autres termes, on choisit les sous-porteuses pilotes du signal numérique multiporteuse parmi celles qui ne tombent pas sur une raie du signal analogique, ceci afin de minimiser dans le récepteur numérique les effets néfastes du brouillage apporté par les signaux analogiques.

Plus généralement, il est souhaitable de ne jamais transmettre de pilote sur celles des sous-porteuses qui sont le plus exposées aux accidents de transmission, afin de maximiser dans le récepteur la confiance apportée au processus crucial qu'est l'estimation de canal. On choisira donc les pilotes parmi un nombre réduit de sous-porteuses, choisies de façon qu'un brouilleur ait le moins de chances possibles de brouiller un pilote. Certaines sous-porteuses, a priori plus exposées, seront systématiquement interdites pour tous les symboles.

D'autre part, l'invention propose, selon une caractéristique avantageuse, de "doper" (augmenter la puissance d'émission) les pilotes pour fiabiliser les informations de référence reçues par le récepteur. Le fait de regrouper les pilotes, comme le préconise l'invention, sur un nombre limité de sous-porteuses (celles qui n'appartiennent pas au sous-ensemble de la coïncidence) autorise réciproquement à augmenter la puissance de ces pilotes sans augmenter significativement la gène induite sur les signaux analogiques. Pour limiter encore le brouillage créé par le numérique, il est intéressant de maintenir le plus constant possible dans le temps la puissance du signal numérique.

L'état de l'art, qui regroupe préférentiellement les pilotes sur certains symboles particuliers, présente donc l'inconvénient de ne pas permettre dans de bonnes conditions le dopage des pilotes, puisqu'il en résulterait une surpuissance des symboles portant les pilotes, qui augmenterait le brouillage induit par le numérique sur l'analogique. Selon une caractéristique innovante de l'invention, chaque symbole porte quasiment (à quelques une près) le même nombre de pilotes de façon à ce que l'augmentation de puissance des pilotes ne résulte pas en une variation temporelle de la puissance du signal.

Selon une caractéristique de l'invention, illustrée en figure 3b, tous les symboles de données utiles (s'il existe des symboles particuliers dans la trame, par exemple dédiés à la synchronisation temps et/ou fréquence du récepteur, ces symboles spéciaux peuvent éventuellement ne pas porter de pilotes, ou en porter un nombre différent) portent des pilotes, tandis que certaines sous-porteuses ne sont jamais pilotes.

L'invention propose donc une nouvelle structure de répartition des pilotes, applicable même en l'absence de la caractéristique principale de l'invention (p $\Delta$f = fl), mais qui se marie particulièrement bien avec elle.

Comme expliqué dans le brevet FR-86 09622, les symboles, de durée utile $T_s$, de la trame OFDM peuvent être séparés par un intervalle de garde temporel, de durée notée $\Delta$, destiné à absorber l'étalement de la réponse impulsionnelle du canal. Les échos sont donc par hypothèse supposés plus courts que $\Delta$ .Si $\kappa$ désigne le quotient Ts/$\Delta$ , alors le théorème d'échantillonnage de Shannon montre que pour un symbole n donné, tous les $H_{n,k}$ peuvent être théoriquement estimés par le récepteur à partir de la connaissance du sous-ensemble des $H_{n, \kappa k}$ seulement (ceci ne signifie pas que toutes les porteuses indicées $\kappa$k du symbole n sont pilotes ; certains, voire tous, des $H_{n, \kappa k}$ peuvent éventuellement résulter d'un processus amont effectué par le récepteur, par exemple d'une interpolation à partir de $H_{n'}$, $\kappa$k' estimés par le récepteur grâce à des pilotes $P_{n',k'}$ où n' peut être différent de n, k' peut être différent de $\kappa$k).

En pratique, sur un suréchantillonnage d'un rapport non nécessairement entier (un suréchantillonnage de rapport quelconque est aisément possible puisque la durée $\Delta$ est quelconque, conduisant à une valeur de kappa non nécessairement entière) simplifie beaucoup dans le récepteur l'opération d'estimation des $H_{n,k}$ manquants. Par exemple, pour un intervalle de garde fixé au quart de la durée utile du symbole ($\kappa$ = 4), Shannon indique que la connaissance de la réponse fréquentielle du canal pour une sous-porteuse sur quatre seulement (c'est-à-dire la connaissance des $H_{n,4k}$) serait théoriquement suffisante pour estimer la réponse fréquentielle du canal pour toutes les sous-porteuses.

En pratique, et toujours dans l'exemple $\kappa$ = 4, on fournira au récepteur la connaissance des $H_{n,2k}$ par exemple (ce qui correspond à un suréchantillonnage d'ordre 1/s = 2) pour simplifier la mise en oeuvre du filtre interpolateur fréquentiel. La figure 3b donne un exemple de structure d'insertion des pilotes dans une trame OFDM, avec 1/s = 2 et $\kappa$ = 4.

Pour un symbole n donné, l'estimation dans le récepteur du sous-ensemble ($H_{n,k0+s\kappa k}$) suffit à réaliser l'estimation de canal pour toutes les sous-porteuses du signal numérique. D'un strict point de vue des lois de l'échantillonnage, $k_0$ peut varier avec n. Selon une caractéristique de l'invention, il est avantageux de geler $k_0$ pour tous les symboles. En reprenant l'exemple d'un signal numérique multiporteuse du type OFDM muni d'un intervalle de garde fixé au quart de la durée utile du symbole ($\kappa$= 4) et d'un coefficient de suréchantillonnage fixé à 2, une sous-porteuse sur 2 seulement a besoin de transmettre parfois un pilote.

On peut convenir que ces sous-porteuses parfois pilotes ("parfois" exprimant le fait qu'une sous-porteuse d'indice k donné peut transmettre des données la plupart du temps (c'est-à-dire être modulée à l'émission par un vecteur $C_{n,k}$ a priori inconnu du récepteur pour la plupart des valeurs de l'indice temporel n), et ne transmettre un pilote modulé par une valeur $P_{n,k}$ a priori connue du récepteur que de temps en temps, sur des symboles n prédéterminés) seront celles d'indice k pair par exemple.

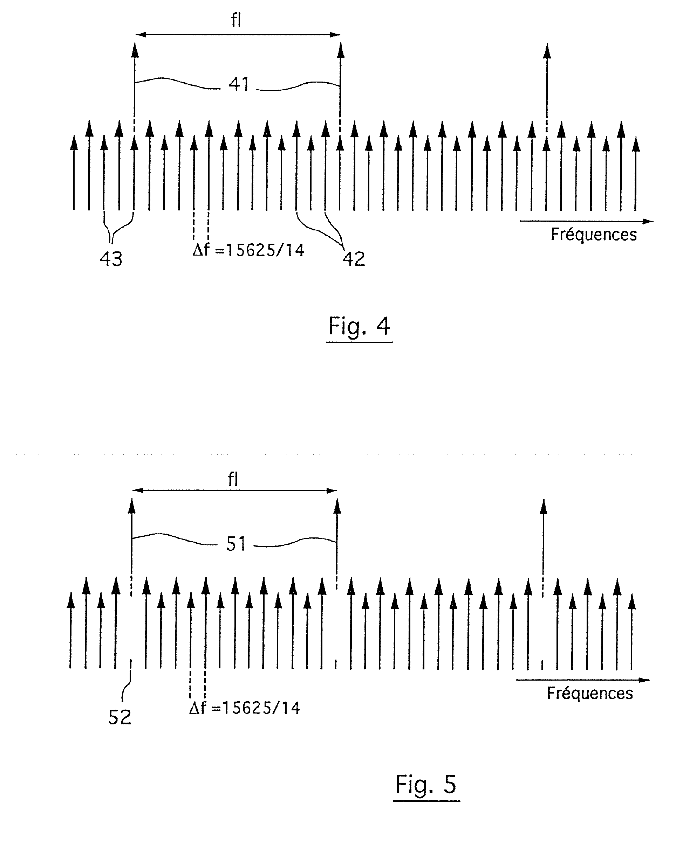

Le choix correct de la fréquence d'échantillonnage du signal OFDM (où correct signifie que p $\Delta$f = fl (= 15625 par exemple)) permet alors de garantir qu'il est possible de positionner le spectre OFDM en radiofréquence de façon à ce que les raies 41 des signaux analogiques brouilleurs tombent toutes sur des sous-porteuses 43 OFDM d'indice k impair, sous-porteuses qui ne sont jamais pilotes 42, ainsi que cela est illustré en figure 4.

Par ailleurs, une autre technique permet de limiter l'effet du bruit entachant l'estimation du canal. On peut en effet doper la puissance de ces pilotes 42 par rapport à la puissance moyenne d'une sous-porteuse numérique : une augmentation de la puissance des pilotes de l'ordre de 3dB semble un bon compromis.

La figure 4 (de même que la figure 5 commentée par la suite) présente donc schématiquement le spectre de puissance du signal multiporteuse sous l'hypothèse d'une fenêtre temporelle (d'intégration de la puissance) longue de plusieurs symboles. En d'autres termes, les spectres de plusieurs symboles sont schématiquement superposés. Pendant les symboles où elles transportent des données numériques ordinaires (c'est-à-dire des $C_{n,k}$ a priori inconnues du récepteur) les sous-porteuses "quelquefois pilotes" ne sont de préférence pas dopées. L'augmentation de puissance résultant du signal OFDM reste acceptable, puisque, pour un symbole donné, les pilotes sont très minoritaires (typiquement 16 fois moins nombreuses comme dans l'exemple de la figure 3b) par rapport aux porteuses transportant des données.

En d'autres termes, pour les symboles où elles sont pilotes, les sous-porteuses sont dans cet exemple transmises avec une puissance 3dB supérieure à la puissance moyenne. Les raies du signal SECAM cocanal sont orthogonales à toutes les sous-porteuses du signal OFDM sauf une seule, et sans jamais coïncider fréquentiellement avec une sous-porteuse pilote : le brouillage apporté par le SECAM aux pilotes est ainsi minimisé.

On notera que le choix de la fréquence d'échantillonnage 8 MHz a l'intérêt que tous les avantages de la présente invention restent acquis sans préjuger de la taille FFT (pourvu qu'elle reste au moins égale à 1024) utilisée pour synthétiser le signal numérique multiporteuse : la valeur 8 MHz convient pour tous les couples (N = taille de la FFT et p = 15625/ $\Delta$f) vérifiant N = 1024*i et p = 2*i où i est un entier strictement positif. Dans un système flexible du point de vue du nombre de sous-porteuses, cet avantage peut être déterminant.

Si les pilotes sont dopés comme expliqué ci-dessus, l'augmentation de leur puissance les rend certes plus brouilleuses vis-à-vis des signaux analogiques, mais ce handicap est limité si les porteuses pilotes occupent justement les portions de spectre pour lesquelles l'énergie des signaux analogiques est minimale.

Si le brouillage réciproque numérique/analogique était encore trop fort, on pourrait être amené à diminuer (par rapport à la puissance moyenne d'une sous-porteuse COFDM modulée par un $C_{n,k}$ a priori inconnu du récepteur) la puissance des sous-porteuses ne transportant jamais de pilotes, et à diminuer d'autant plus cette puissance que la sous-porteuse ainsi atténuée est fréquentiellement plus proche d'une raie analogique.

Un cas particulier intéressant, illustré en figure 5 est celui où les sous-porteuses numériques 52 qui tombent sur les raies analogiques 51 voient leur puissance ramenée à zéro et ne sont donc pas émises : en reprenant l'exemple ci-dessus avec p = 14, une sous-porteuse sur 14 ne serait pas émise. Contrairement à ce que préconise le brevet FR 86 18163 dans lequel étaient émises les seules sous-porteuses numériques tombant exactement entre deux raies analogiques, on peut donc être amené à ne supprimer du spectre numérique que les seules sous-porteuses tombant exactement sur une raie analogique.

Dans le cas où certaines sous-porteuses numériques ne sont pas émises, le processus de répartition de l'information numérique à transmettre sur les sous-porteuses est simplement suspendu pour ces porteuses non-émises, et le récepteur sait a priori que ces sous-porteuses ne contiennent aucune information.

Plus généralement, il est possible d'adapter et de moduler la puissance affectée à chaque sous-porteuse, en fonction de sa proximité fréquentielle avec une raie analogique, ou tout autre brouilleur. Ce principe, qui s'applique également à la sélection d'une constellation de modulation et/ou à la robustesse du codage affectées à chaque sous-porteuse, peut être mis en oeuvre même lorsque le signal numérique n'est pas positionné en fréquence par rapport aux signaux analogiques, tel que décrit précédemment.

En effet, de façon avantageuse, la puissance affectée à chacune desdites sous-porteuses tient compte de la position fréquentielle de ladite sous-porteuse par rapport auxdites raies analogiques vidéo. La puissance de chaque sous-porteuse peut ainsi décroître quant la sous-porteuse est plus proche d'une raie analogique vidéo. Cette loi décroissante peut prendre différentes formes, et un cas extrême intéressant est celui où toutes les sous-porteuses sont équi-puissantes, sauf celles du sous-ensemble de coïncidence qui ne sont pas émises du tout.

Ou bien, ce n'est pas la puissance affectée à chaque sous-porteuse qui varie selon sa position fréquentielle, mais sa constellation : par exemple, on modulera les sous-porteuses du sous-ensemble de coïncidence par une modulation de type 4-PSK, les sous-porteuses immédiatement voisines par une 16QAM et les autres sous-porteuses par une 64 QAM.

Ou bien encore, si chaque sous-porteuse est modulée par une modulation codée, c'est la robustesse du code qui augmente pour les sous-porteuses proches (ou confondues avec) des sous-porteuses du sous-ensemble de coïncidence : par exemple, toutes les sous-porteuses seront modulées par une 64QAM codée par un code (par exemple convolutif) de rendement 1/2 pour les sous-porteuses voisines, et de rendement 5/6 pour les autres.

Ces trois méthodes (puissance, constellation, ou code différents) peuvent bien sûr être utilisées conjointement. Elles offrent toutes cependant l'inconvénient que le récepteur doit a priori connaître ces variations de puissance/constellation/codage en fonction de chaque sous-porteuse.

Une autre méthode selon l'invention consiste à pondérer la puissance émise sur chaque sous-porteuse sans prévenir a priori le récepteur. Cela est possible en filtrant à l'émission le signal par un filtre dont l'étalement de la réponse impulsionnelle g(t) est compatible avec les capacités d'estimation de canal des récepteurs ; si G(f) désigne la transformée de Fourier de g(t), G(f) est appelée fonction de transfert complexe du filtre. Si $f_k$ désigne la fréquence de la sous-porteuse indicée k, on convient de noter Gk = G($f_k$).

Dire que le filtre a une réponse impulsionnelle g(t) "compatible avec les capacités d'estimation de canal" des récepteurs est équivalent à dire que le niveau de corrélation entre $G_k$ et $G_{k+1}$ doit être compatible avec les possibilités du mécanisme d'estimation de canal du récepteur, qui est alors capable de "voir" la fonction de transfert g(f) exactement comme si elle résultait d'une ou plusieurs échos dus à une propagation du signal par chemins multiples.

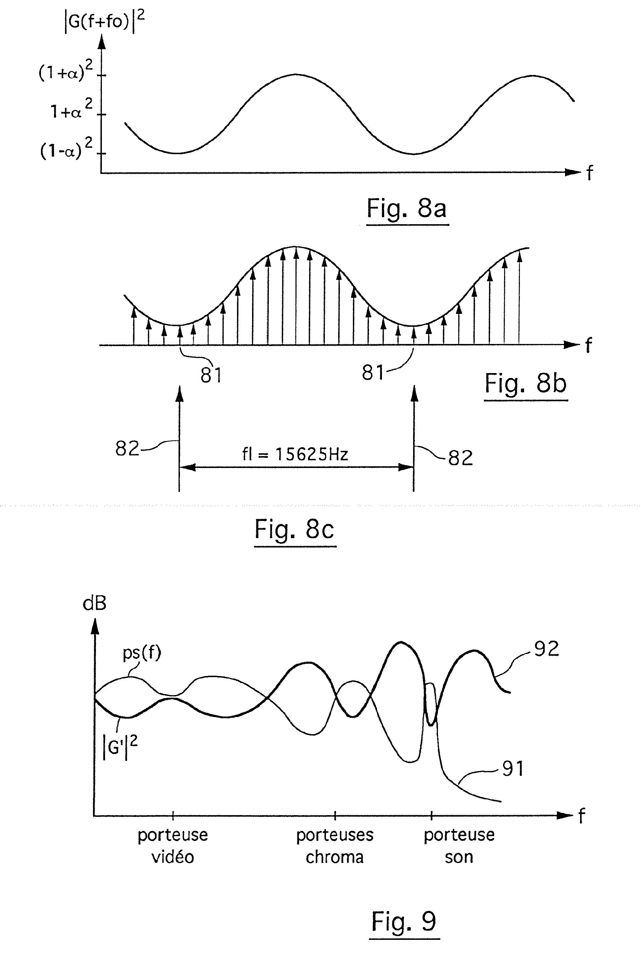

Le filtre g(t) peut être introduit à l'émission sur le signal temporel, c'est-à-dire en aval de la DFT$^{-1}$. Cette méthode présenterait cependant l'inconvénient de "croquer" une partie de l'intervalle de garde. Une meilleure méthode consiste à introduire ce filtre g(t) sur le signal fréquentiel, c'est-à-dire en amont de la DFT$^{-1}$ : si $C_k$ désigne le vecteur complexe modulant la sous-porteuse k, on remplacera simplement $C_k$ par $C_k.G_k$. Il est avantageux par exemple de choisir G(f) telle que G(f+$f_o$)$^2$ = 1 + $\alpha^2$ + 2$\alpha$ cos (2$\pi$f$\tau$) comme illustré en figure 8a.

La fonction de transfert G(f + $f_o$) est dans cet exemple équivalente à celle qui résulterait d'un écho de retard $\tau$ et de niveau $\alpha$ (relativement à l'instant d'arrivée et au niveau du chemin direct). $f_o$ est une valeur arbitraire qui permet de translater fréquentiellement les bosses et les creux de la fonction de transfert pour qu'ils coïncident exactement avec les sous-porteuses qu'on désire doper ou atténuer. La figure 8b présente ainsi la puissance relative affectée à chaque sous-porteuse.

Cette autre méthode est meilleure en ce sens que la pondération de la puissance des sous-porteuses n'a pas à être a priori connue du récepteur : on maîtrise ainsi -pour chaque contexte de diffusion particulier- les perturbations réciproques des deux signaux numérique et analogique (éventuellement en privilégiant l'un ou l'autre de ces signaux, en fonction des besoins ou des impératifs).

Enfin, à long terme, quand il est devenu possible d'éteindre les signaux analogiques, il est également possible de supprimer le filtrage G(f + $f_o$) d'émission en garantissant une comptabilité totale du signal nouvellement émis avec l'intégralité du parc des récepteurs existants à cette date.

Selon un mode de réalisation préférentielle de l'invention, les sous-porteuses le plus atténuées 81 sont précisément celles du sous-ensemble de coïncidence, qui correspondent aux raies 82 du signal analogique de la figure 8c.

La puissance affectée à chaque sous-porteuse peut également être pondérée pour tenir compte de la courbe ps(f) 91 dite de "perceptibilité subjective" d'un brouilleur sur une image analogique. Cette courbe 91 est schématisée en figure 9. Elle trace les différences de perceptibilité par l'oeil humain d'un brouilleur sinusoïdal ajouté à un signal de télévision analogique, en fonction de la position fréquentielle de ce brouilleur, relativement à la position fréquentielle de la porteuse vidéo analogique.

Puisque la gêne causée sur' l'image analogique par une sous-porteuse numérique dépend de sa fréquence, il est judicieux de pondérer à l'émission la puissance des sous-porteuses numériques pour que les sous-porteuses les plus gênantes subjectivement sur l'image analogique soient émises avec une puissance moindre. Cette pondération de la puissance émise peut se faire grâce à un filtrage G' 92 d'émission similaire au filtrage G déjà décrit. De façon similaire, ce filtrage G' peut avantageusement n'être pas a priori connu des récepteurs. Les filtrages G et g' peuvent avantageusement être combinés : on appliquera à l'émission un filtrage produit G.G'.

La figure 9 illustre ce que peut être la courbe |G'|$^2$92. |G'|2 est ajustée de façon à ce que le produit |G'(f)|$^2$.ps (f) soit à peu près constant.

Lorsque certaines desdites sous-porteuses sont, au moins à certains instants de transmission, c'est-à-dire pour certains symboles, des sous-porteuses pilotes portant une information de référence commune a priori des récepteurs et utilisées par celui-ci pour l'estimation de canal et/ou la synchronisation fréquentielle et/ou temporelle, il est avantageux que lesdites sous-porteuses n'appartiennent pas audit sous-ensemble de coïncidence. En effet, il est important que ces sous-porteuses pilotes soient le moins perturbées possible.

Lorsque certaines desdites sous-porteuses sont, au moins à certains instants de transmission, c'est-à-dire pour certains symboles, des sous-porteuses pilotes portant une information de référence commune a priori des récepteurs et utilisées par celui-ci pour l'estimation de canal et/ou la synchronisation fréquentielle et/ou temporelle, il est avantageux que lesdites sous-porteuses n'appartiennent pas audit sous-ensemble de coïncidence. En effet, il est important que ces sous-porteuses pilotes soient le moins perturbées possible.

L'invention permettant de connaître par avance les sous-porteuses qui concentrent l'essentiel du brouillage induit par les signaux analogiques, il devient possible de définir la répartition temps/fréquence des pilotes dans la trame numérique de façon à éviter que les pilotes n'appartiennent au sous-ensemble de coïncidence.

Réciproquement, il est intéressant d'affecter aux sous-porteuses pilotes -au moins pendant les symboles où ces sous-porteuses portent effectivement une information de référence -une puissance supérieure à la puissance moyenne des autres sous-porteuses. Cela permet encore une fois d'améliorer la fiabilité de ces informations de référence si importantes pour le récepteur. En permettant de garantir que ces porteuses pilotes n'appartiennent pas au sous-ensemble de coïncidence, l'invention permet de doper la puissance des sous-porteuses pilotes d'autant mieux que celles-ci brouillent dorénavant une partie du spectre des signaux analogiques moins dense en énergie, et donc moins fragiles vis-à-vis des brouilleurs.

On montre par la suite qu'une nouvelle répartition des pilotes dans la trame, proposée par l'invention, permet de tirer pleinement profit du choix correct de la fréquence d'échantillonnage.

Il est à noter que cette technique de prise en compte des perturbations peut être mise en oeuvre même lorsque l'ajustement fréquentiel des sous-porteuses par rapport aux raies des signaux analogiques de télévision n'est pas mis en oeuvre.

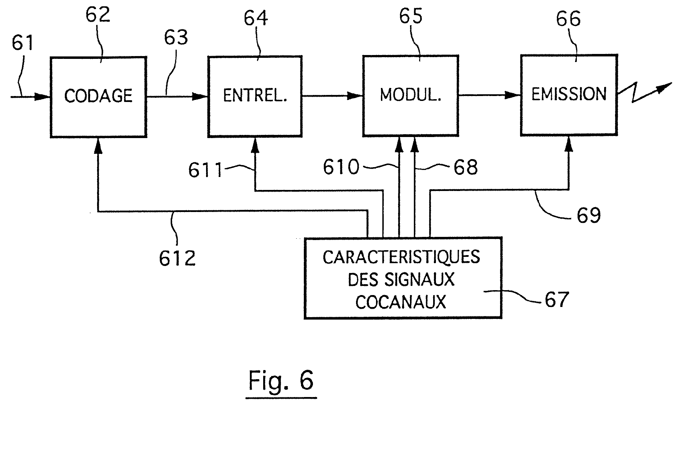

La figure 6 illustre de façon très schématique un dispositif d'émission d'un signal selon l'invention.

Le flot numérique à transmettre 61 (ou les flots numériques) subit éventuellement et de préférence un codage 62 classique, par exemple convolutif. Ensuite, les éléments de données codés 63 sont de préférence entrelacés (64), puis modulent (65) les sous-porteuses du signal numérique, pendant la durée d'un symbole. Les symboles sont alors, classiquement émis (66) vers les récepteurs.

Selon l'invention, on tient compte des caractéristiques 67 des signaux de télévision analogiques cocanaux de façon à :

- ajuster l'espacement interporteuse lors de la modulation 65, et plus particulièrement lors de l'opération de conversion numérique/analogique, en fonction de la fréquence ligne 68 ;
- ajuster une des sous-porteuses sur la raie vidéo principale 69 lors du passage 66 en radiofréquence.

Avantageusement, les moyens de modulation prennent également en compte (610) la proximité des sous-porteuses et des raies analogiques cocanal pour modifier la puissance allouée à chaque sous-porteuse. Eventuellement, la puissance peut être nulle pour les sous-porteuses coïncidant avec une raie. Dans ce cas, l'entrelacement 54 tient compte (611) des porteuses non émises.

Comme indiqué ci-dessus, les informations 67 peut être plus précises, et comprendre les éventuels brouilleurs, la courbe de perceptibilité subjective,... Ces informations peuvent agir non seulement sur la puissance de chaque sous-porteuse (610) (pondération objective (figure 8a) et/ou subjective (figure 9)), mais également sur le choix d'une constellation et/ou une robustesse de codage (612) pour le codage 62.

Par ailleurs, les moyens de modulation insèrent les sous-porteuses pilotes, préférentiellement avec une puissance supérieure à la puissance moyenne, et préférentiellement en évitant de placer des pilotes sur les sous-porteuses du sous-ensemble de coïncidence, et préférentiellement en insérant un certain nombre de pilotes à chaque symbole.

## Revendications

1. Emetteur d'un signal numérique formé d'une pluralité de sous-porteuses et présentant un espacement fréquentiel interporteuse $\Delta f$ entre deux sous-porteuses voisines, **caractérisé en ce qu'**il comprend des moyens de mise en forme dudit signal numérique agissant de façon que ledit espacement fréquentiel interporteuse $\Delta f$ soit un sous-multiple d'une fréquence ligne fl d'au moins un signal de télévision analogique prédéterminé.

2. Emetteur selon la revendication 1, **caractérisé en ce qu'**il comprend des moyens d'émission d'une desdites sous-porteuses à une fréquence sensiblement égale à pv + n.fl, pv étant porteuse vidéo principale dudit signal de télévision analogique et n étant un nombre entier, de façon qu'un sous-ensemble desdites sous-porteuses, dit sous-ensemble de coïncidence, coïncide sensiblement avec au moins certaines desdites raies analogiques vidéo.

3. Emetteur selon l'une quelconque des revendications 1 et 2, **caractérisé en ce qu'**il comprend des moyens de choix de la puissance et/ou des moyens de choix d'une constellation de modulation et/ou des moyens de choix d'une robustesse de codage affectés à chacune desdites sous-porteuses, lesdits moyens de choix tenant compte de la position fréquentielle de ladite sous-porteuse par rapport auxdites raies analogiques vidéo.

4. Emetteur selon la revendication 3, **caractérisé en ce qu'**il comprend des moyens d'émission des sous-porteuses dudit sous-ensemble de coïncidence avec une puissance inférieure à la puissance affectée aux autres sous-porteuses, lorsqu'elles sont émises.

5. Emetteur selon l'une quelconque des revendications 3 et 4, **caractérisé en ce que** lesdits moyens de choix de la puissance et/ou lesdits moyens de choix d'une constellation de modulation et/ou lesdits moyens de choix d'une robustesse de codage source tiennent compte d'au moins un des critères appartenant au groupe comprenant :

- compensation au moins partielle de la différence de perceptibilité subjective de chacune desdites sous-porteuses sur l'image portée par ledit signal analogique ;
- compensation au moins partielle des différences de sensibilité des sous-porteuses vis-à-vis du brouillage induit par ledit signal analogique, et réciproquement.

6. Emetteur selon l'une quelconque des revendications 2 à 5, comprenant des moyens de mise en forme dudit signal numérique agissant de façon que certaines desdites sous-porteuses soient, au moins à certains instants de transmission, des sous porteuses pilotes portant une information de référence connue des récepteurs, **caractérisé en ce que** ledit émetteur comprend des moyens de mise en forme dudit signal numérique agissant de façon que lesdites sous-porteuses pilotes n'appartiennent pas audit sous ensemble de coïncidence.

7. Emetteur selon la revendication 6, **caractérisé en ce qu'**il comprend des moyens d'affection auxdites sous-porteuses pilotes d'une puissance supérieure à la puissance des autres sous-porteuses.

8. Emetteur selon l'une quelconque des revendications 6 et 7, **caractérisé en ce qu'**il comprend des moyens de répartition desdites sous-porteuses pilotes sur tous lesdits symboles à l'exception, le cas échéant, de symboles spéciaux de synchronisation temporelle et/ou fréquentielle.

9. Emetteur selon l'une quelconque des revendications 1 à 8, **caractérisé en ce qu'**il comprend des moyens de mise en forme dudit signal numérique agissant de façon que l'espacement fréquentiel interporteuse $\Delta f$ entre deux sous-porteuses voisines soit choisi de façon à limiter également les perturbations induites par les raies audio dudit signal de télévision analogique.

10. Emetteur selon l'une quelconque des revendications 1 à 9, comprenant des moyens d'émission dudit signal numérique simultanément à l'émission d'au moins deux signaux de télévision analogiques émis en position d'offset de trame et/ou de ligne, **caractérisé en ce que** lesdits moyens d'émission tiennent compte de la valeur desdits offsets de trame et/ou de ligne.

11. Emetteur selon l'une quelconque des revendications 1 à 10, **caractérisé en ce qu'**il comprend des moyens de mise en forme dudit signal numérique agissant de façon que ledit signal comprenne 8192 sous-porteuses, et de façon que l'espacement fréquentiel interporteuse $\Delta f$ vaille $(1/p).fl$, avec p choisi dans le groupe comprenant les valeurs 12, 14, 15 et 16.

fl

1211    1212    1213    ←~~12

←~~11

1111    Δf    1112    1113    Fréquences
= 15625/14

<u>Fig. 1</u>

zone A
de diffusion
d'un signal TV
conventionnel    22A

21

22B    zone de
diffusion
du signal
numérique

zone B
de diffusion
d'un signal TV
conventionnel    22C

zone C
de diffusion
d'un signal TV
conventionnel

signal de
la zone A    23A →    261

signal de
la zone B    23B →    262

signal de
la zone C    23C →    15625Hz
263

répartition    24
fréquentielle des
sous-porteuses
du signal numérique

251    252    Δf =15625/12    Fréquences
253

<u>Fig. 2</u>

**Fig. 3a**

- ● pilote
- ○ sous-porteuse utile

**Fig. 3b**

- ● pilote
- ○ sous-porteuse utile

Fig. 4

Fig. 5

Fig. 6

$$|G(f+fo)|^2$$

$(1+\alpha)^2$

$1+\alpha^2$

$(1-\alpha)^2$

f

<u>Fig. 8a</u>

f

81          81

<u>Fig. 8b</u>

82          fl = 15625Hz          82

<u>Fig. 8c</u>

dB

ps(f)

$|G'|^2$

92

91

f

porteuse          porteuses          porteuse
vidéo              chroma             son

<u>Fig. 9</u>

16

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 8609622
- FR 8618163
- EP 0571005 A

**Littérature non-brevet citée dans la description**

- **M. Alard ; R. Lassalle.** *Revue de l'UER, n DEG 224,* Août 1987, 168-190